# FASCICULE DE BREVET EUROPEEN

(11) **EP 2 132 816 B1**
(45) Date de publication et mention de la délivrance du brevet: **27.02.2013**
(21) Numéro de dépôt: 08734612.8
(22) Date de dépôt: 14.03.2008
(51) Int. Cl.: H01M 8/02

(54) **PILE A COMBUSTIBLE A ELECTROLYTE POLYMERE**
POLYMERELEKTROLYT-BRENNSTOFFZELLE
POLYMER-ELECTROLYTE FUEL CELL

(30) Priorité: 20.03.2007 FR 0702031
(43) Date de publication de la demande: 16.12.2009
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: OLSOMMER, David, CH-1801 Le Mont Pelerin (CH)
(74) Mandataire: Bauvir, Jacques
(86) Numéro de dépôt international: PCT/EP2008/002055
(87) Numéro de publication internationale: WO 2008/125174

(56) Documents cités:
- DE-A1- 19 926 027
- DE-U1-202004 017 647
- GB-A- 2 394 828

## Description

### DOMAINE DE L'INVENTION

La présente invention concerne les piles à combustible à membrane polymère échangeuse d'ions.

### ETAT DE LA TECHNIQUE

Une pile à combustible est constituée d'un empilage de cellules électrochimiques élémentaires connectées électriquement en série et qui, chacune, développe une certaine tension, en général de l'ordre de 1 Volt. La tension totale développée par la pile vaut donc la somme des tensions élémentaires, par exemple de l'ordre de 100 Volts ou quelques centaines de Volts pour des piles à combustible visant des applications au domaine des transports.

Chaque cellule électrochimique élémentaire est habituellement constituée de la superposition de cinq couches : une feuille en matériau polymère dont une zone forme une membrane échangeuse d'ions, deux électrodes comportant des éléments chimiques nécessaires au déroulement de la réaction électrochimique, comme par exemple du platine, et deux couches de diffusion des gaz permettant d'assurer une diffusion homogène des gaz acheminés par les réseaux des plaques bipolaires sur la totalité de la surface de la membrane échangeuse d'ions.

L'alimentation des gaz est assurée par des plaques que l'on appelle en général « plaques bipolaires » car elles sont en contact avec l'anode d'une cellule et avec la cathode de la cellule adjacente. Le plus souvent, les plaques bipolaires sont constituées en une matière conductrice de l'électricité car il faut assurer une conduction électrique d'une cellule à l'autre, la pile à combustible étant formée par des cellules électrochimiques élémentaires qui sont connectées électriquement en série.

La demande de brevet W02005/006472 décrit une pile à combustible conforme à la description ci-dessus. On consultera en particulier la figure 7 qui montre un empilage de cellules élémentaires. Lorsque le matériau constitutif des plaques bipolaires est conducteur de l'électricité, cas le plus courant, les faces apparentes d'une pile à combustible sont donc sous tension lorsque la pile à combustible est en service. D'un côté de l'empilage, cette tension peut devenir très élevée, la tension maximale étant la tension nominale de la pile à combustible, à savoir typiquement supérieure à 100 Volts. Il est donc nécessaire d'encapsuler une telle pile à combustible pour éviter tout risque de contact accidentel avec celle-ci. Cela répond à la fois à un objectif de sécurité et à un objectif de bon fonctionnement de la pile, car si des cellules se trouvaient à être mises en court-circuit, le fonctionnement de la pile s'en trouverait altéré.

La demande de brevet US 2006/0046131 décrit une pile à combustible dont la MEA (Membrane Electrode Assembly) est de taille agrandie pour éviter des courts-circuits entre plaques bipolaires. La demande DE 2004 017647 U1 décrit une pile à combustible encapsulée par une couche étanche de matière plastique.

L'objectif de la présente invention est d'apporter une autre solution pratique à ce problème du contact électrique possible avec les plaques bipolaires lorsque la pile à combustible n'est pas encapsulée, ainsi qu'au risque de court-circuit entre cellules, problème qui peut survenir de contacts accidentels avec des corps étrangers.

### BREVE DESCRIPTION DE L'INVENTION

Le déposant a imaginé que, puisque la feuille en matériau polymère sur laquelle est agencée la partie échangeuse d'ions de la pile à combustible forme un substrat qui est par nature non conducteur de l'électricité, il suffit de faire déborder les feuilles en matériau polymère par rapport aux plaques bipolaires afin d'obtenir une multitude de lèvres orientées sensiblement perpendiculairement à la surface des tranches de plaques bipolaires, faisant protubérance par rapport aux plaques bipolaires et ainsi conférer à la pile à combustible un premier niveau de protection contre les inconvénients et risques décrits. En variante, au lieu que la lèvre soit formée par un prolongement de la feuille en matériau polymère, on peut implanter un insert formant un renfort périphérique associé à chaque feuille en matériau polymère et débordant par rapport aux plaques bipolaires, ledit renfort étant en matériau non conducteur de l'électricité.

Bien entendu, on peut en plus, si on le souhaite, encapsuler la pile à combustible comme cela se fait couramment mais la protection par les lèvres offrent un premier niveau de protection très utile notamment pour des opérations de maintenance où un opérateur se rapproche de la pile à combustible alors que celle-ci est sous tension. La protection de la pile à combustible offerte par l'invention peut s'avérer également utile pour améliorer sa fiabilité.

L'invention propose donc une pile à combustible comportant un empilage de plaques de distribution de fluide et de feuilles en matériau polymère comportant une zone formant membrane échangeuse d'ions, chaque feuille en matériau polymère étant interposée entre deux plaques de distribution de fluide pour former une cellule élémentaire, caractérisée en ce qu'au moins au niveau de certaines cellules élémentaires, la pile à combustible comporte une lèvre débordante, en matériau non conducteur de l'électricité, qui déborde par rapport à au moins une extrémité des plaques de distribution de fluide adjacentes.

Dans toutes les variantes de réalisation exposées ci-dessous, chaque lèvre débordante est associée à une feuille en matériau polymère. Cependant, cela n'est nullement limitatif ; les lèvres débordantes pourraient aussi être associées aux plaques de distribution.

### BREVE DESCRIPTION DES FIGURES

La présente invention sera mieux comprise grâce à la description détaillée d'un mode de réalisation illustré avec les figures jointes dans lesquelles :
la figure 1 est un schéma montrant un premier mode de réalisation d'une pile à combustible selon l'invention ;
la figure 2 montre le premier mode de réalisation lorsque l'on approche un objet contre ledit mode de réalisation ;
la figure 3 est un schéma montrant un deuxième mode de réalisation d'une pile à combustible selon l'invention ;
la figure 4 montre le deuxième mode de réalisation lorsque l'on approche un objet contre ledit deuxième mode de réalisation ;
la figure 5 est un schéma montrant un troisième mode de réalisation d'une pile à combustible selon l'invention.

### DESCRIPTION DES MODES DE REALISATION PREFERES DE L'INVENTION

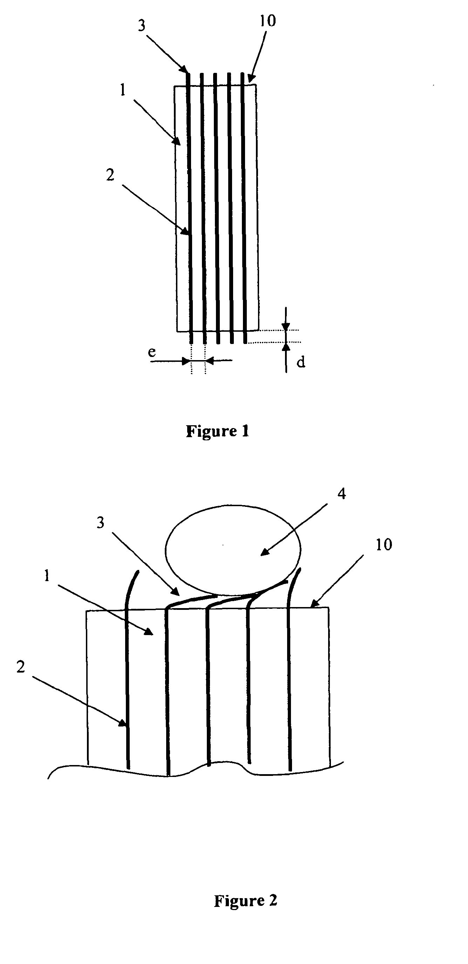

A la figure 1, on voit une partie d'un assemblage formant une pile à combustible : des plaques bipolaires 1 ayant des tranches 10 accessibles de l'extérieur et des feuilles en matière polymère 2. On sait qu'une cellule électrochimique élémentaire est (sans que ceci ne limite en aucune façon l'invention) habituellement constituée de la superposition de cinq couches : une membrane polymère échangeuse d'ions formée sur la feuille en matériau polymère 2, deux électrodes comportant des éléments chimiques nécessaires au déroulement de la réaction électrochimique, comme par exemple du platine, lesdites électrodes étant formées par un revêtement déposé de part et d'autre de la membrane, et deux couches de diffusion des gaz permettant d'assurer une diffusion homogène des gaz acheminés par les réseaux des plaques bipolaires 1 sur la totalité de la surface formant membrane échangeuse d'ions.

L'épaisseur des plaques bipolaires 1 vaut « e ». On voit au premier mode de réalisation (figures 1 et 2) qu'un prolongement de chaque feuille en matériau polymère 2 forme une lèvre débordante 3, qui déborde par rapport aux plaques bipolaires 1 d'une valeur, qui sur le dessin, vaut « d ».

Les plaques bipolaires 1 sont en fait des plaques de distribution de fluide. On parle de plaques bipolaires parce que, sauf celles de chaque extrémité de l'empilage, elles sont chacune en contact avec l'anode d'une cellule et avec la cathode de la cellule adjacente.

Chaque plaque bipolaire 1 forme une équipotentielle. La différence de tension d'une plaque bipolaire à la suivante est de l'ordre de 1 Volt. Lorsque la pile à combustible est en service, étant donné le caractère conducteur de l'électricité du matériau des plaques bipolaires dans les cas le plus courant (graphite, acier, ...), les tranches 10 des plaques bipolaires sont sous tension. L'ensemble des lèvres 3 débordantes forme une sorte de barrière mécanique qui rend beaucoup plus difficile tout contact avec la tranche 10 des plaques bipolaires. Notamment, l'intrusion accidentelle d'un corps étranger conducteur ne parviendra pas, lorsqu'il est de taille supérieure à l'épaisseur des plaques bipolaires, à créer un chemin de conduction électrique entre une plaque bipolaire et la plaque bipolaire adjacente. De préférence, la pile à combustible selon l'une des revendications comporte une lèvre débordante au niveau de chacune des feuilles en matériau polymère.

Qu'il y ait ou non une lèvre débordante au niveau de chaque feuille en matériau polymère, la pile à combustible peut être équipée de lèvres non pas sur la totalité du pourtour mais seulement là où l'on veut renforcer l'isolation parce que le risque de contact par un opérateur ou le risque de court circuit par des corps étrangers est plus élevé. Par exemple, la face supérieure et les faces latérales de la pile à combustible sont ainsi protégées mais la face inférieure ne l'est pas.

En résumé, la lèvre débordante déborde par rapport au pourtour des plaques de distribution de fluide là où l'on veut protéger d'un contact avec les tranches des plaques bipolaires, c'est-à-dire là où l'on veut protéger les faces latérales de la pile à combustible.

On sait que, le plus souvent, la matière polymère utilisée pour les feuilles 2 est souple. A la figure 2, on voit que si on approche un objet 4 de la pile à combustible (ou le doigt d'un opérateur), cela provoque le fléchissement de la lèvre 3 de la feuille en matériau polymère souple 2, à savoir la partie qui déborde par rapport aux plaques bipolaires 1. Chaque feuille en matériau polymère déborde d'une valeur « d » qui est supérieure à l'épaisseur « e » de chaque plaque bipolaire 1. De la sorte, lorsque les lèvres 3 des feuilles en matériau polymère 2 se replient sur les tranches 10 de chaque plaque bipolaire 1, lesdites lèvres 3 recouvrent totalement les tranches 10.

Même si quelqu'un vient à poser sa main ou un outil sur la pile à combustible lorsqu'elle est sous tension, il va se former automatiquement une barrière non conductrice de l'électricité. Le risque de contact électrique entre un opérateur et une plaque bipolaire ou entre un outil et deux plaques bipolaires adjacentes est ainsi radicalement réduit.

En outre, la présence de ces lèvres 3 de chaque feuille en matériau polymère souple 2 va allonger le chemin de fuite entre une plaque bipolaire 1 et la plaque bipolaire 1 adjacente. Cela améliore aussi l'isolation électrique entre deux plaques bipolaires adjacentes.

L'invention s'étend aussi à différentes variantes de réalisation des lèvres débordantes, notamment celles qui vont être exposées ci-dessous.

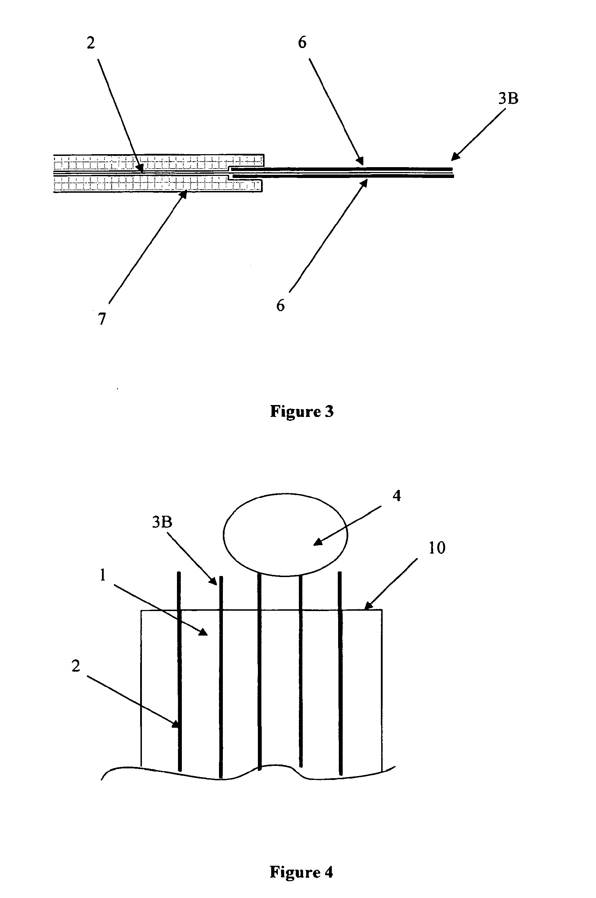

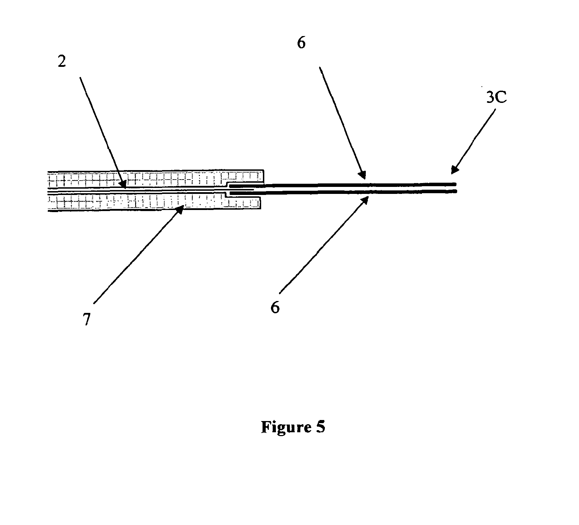

En alternative, la lèvre débordante peut être formée par un ou plusieurs inserts 6 (voir figures 3 et 5) réalisé en matériau non conducteur de l'électricité. Un tel insert insert 6 est par exemple réalisé en matériau composite, par exemple de type résine-fibres de verres, ou en un polymère plutôt rigide. Dans un tel cas (voir figure 4), la protection électrique décrite ci-dessus est également assurée.

A la figure 3, on voit une feuille en matériau polymère 2 avec de part et d'autre de la zone chimiquement active formant membrane échangeuse d'ions des couches de diffusion des gaz 7. Les plaques bipolaires (non représentées) s'étendent sur la même surface que les couches de diffusion des gaz. On voit aussi de part et d'autre d'un prolongement de la feuille en matériau polymère 2 des inserts 6, soit en polymère souple, soit en polymère rigide, soit en matière composite. L'insert 6 peut être engagé sous l'extrémité de la couche de diffusion des gaz 7 adjacente, comme illustré aux figures, ou pourrait être seulement affleurant à celles-ci. La couche de diffusion des gaz 7 est d'une constitution telle qu'elle se laisse écraser pour s'accommoder à la petite surépaisseur au droit de l'insert 6. L'assemblage illustré aux figures 3 et 4 forme une lèvre 3B rigide, débordante par rapport aux couches de diffusion des gaz et donc par rapport aux plaques bipolaires adjacentes. Vu sa constitution, la lèvre 38 ne fléchit pas lorsque l'on approche un objet 4 de la pile à combustible. En variante, on pourrait n'implanter un insert 6 que d'un seul côté de la feuille en matériau polymère 2.

La variante illustrée à la figure 5 diffère de la précédente en ce que la feuille en matériau polymère 2 ne déborde pas par rapport aux couches de diffusion des gaz 7. Cette fois, ce sont les inserts 6 qui prolongent la feuille en matériau polymère 2. Les inserts 6 sont nécessairement engagés sous l'extrémité de la couche de diffusion des gaz 7 adjacente, comme illustré à la figure 5. Pour des raisons de fabrication, les inserts sont rapportés sur le pourtour de la feuille en matériau polymère 2. En variante, on pourrait aussi n'implanter un insert 6 que d'un seul côté de la feuille en matériau polymère 2. L'assemblage illustré à la figure 5 forme une lèvre 3C rigide, débordante par rapport aux couches de diffusion des gaz et donc par rapport aux plaques bipolaires adjacentes, qui ne fléchit pas lorsque l'on approche un objet de la pile à combustible.

Signalons encore que, dans les deux dernières variantes, de préférence l'insert 6 forme un cadre qui entoure la feuille en matériau polymère 2, ce qui concourre à la rigidité des lèvres 3B et 3C.

Ainsi, grâce à l'invention, les lèvres débordantes d'une certaine façon isolent les plaques bipolaires de l'extérieur et, lorsqu'elles sont souples, elles sont capables de recouvrir l'extrémité libre de chaque plaque bipolaire et ainsi offrir une isolation électrique assez efficace. La sécurité contre les courts-circuits entre deux plaques bipolaires adjacentes est améliorée et le risque d'électrocution est fortement diminué.

## Revendications

1. Pile à combustible comportant un empilage de plaques de distribution de fluide et de feuilles en matériau polymère (2) comportant une zone formant membrane échangeuse d'ions, chaque feuille en matériau polymère étant interposée entre deux plaques de distribution de fluide pour former une cellule élémentaire, **caractérisée en ce qu'**au moins au niveau de certaines cellules élémentaires, la pile à combustible comporte une lèvre débordante (3), en matériau non conducteur de l'électricité, qui déborde par rapport à au moins une extrémité des plaques de distribution de fluide adjacentes, **caractérisée en ce que** chaque lèvre déborde par rapport aux plaques de distribution adjacentes sur une longueur « d » supérieure à l'épaisseur « e » des plaques de distribution de fluide adjacentes.

2. Pile à combustible selon la revendication 1 dans laquelle, au moins au niveau de certaines feuilles en matériau polymère, la lèvre déborde par rapport à tout le pourtour des plaques de distribution de fluide adjacentes.

3. Pile à combustible selon l'une des revendications 1 ou 2, dans laquelle chaque lèvre débordante est formée par le prolongement d'une feuille en matériau polymère.

4. Pile à combustible selon l'une des revendications 1 à 3 dans laquelle chaque lèvre débordante (3) est formée par le substrat des feuilles en matériau polymère (2) comportant une zone formant membrane échangeuse d'ions.

5. Pile à combustible selon la revendication 4, dans laquelle chaque feuille en matériau polymère est souple.

6. Pile à combustible selon l'une des revendications 1 à 3, dans laquelle chaque lèvre débordante est formée par un insert en matériau non conducteur de l'électricité.

7. Pile à combustible selon l'une des revendications 2 à 6 comportant une lèvre débordante au niveau de chacune des feuilles en matériau polymère.

8. Pile à combustible selon l'une des revendications 1 à 7, dans laquelle les plaques de distribution de fluide, sauf celles de chaque extrémité de l'empilage, forment des plaques bipolaires (1).

## Claims

1. Fuel cell comprising a stack of fluid distribution plates and polymer films (2) comprising a zone that forms an ion-exchange membrane, each polymer film being interposed between two fluid distribution plates in order to form an individual cell, **characterized in that**, at least at the level of certain individual cells, the fuel cell comprises an overhanging lip (3) made of an electrically non-conductive material, which overhangs relative to at least one end of the adjacent fluid distribution plates, **characterized in that** each lip overhangs relative to the adjacent distribution plates by a length "d" greater than the thickness "e" of the adjacent fluid distribution plates.

2. Fuel cell according to Claim 1, in which, at least at the level of certain polymer films, the lip overhangs relative to the entire perimeter of the adjacent fluid distribution plates in which each overhanging lip (3) is associated with a polymer film.

3. Fuel cell according to Claim 1 or 2, in which each overhanging lip is formed by the extension of a polymer film.

4. Fuel cell according to either of Claims 1 to 3, in which each overhanging lip (3) is fomed by the substraste of polymer films (2), comprising a zone that forms an ion-exchange membrane.

5. Fuel cell according to Claim 4, in which each polymer film is flexible.

6. Fuel cell according to either of Claims 1 to 3, in which each overhanging lip is formed by an insert made of an electrically non-conductive material.

7. Fuel cell according to one of Claims 2 to 6, comprising an overhanging lip at each of the polymer films.

8. Fuel cell according to one of Claims 1 to 7, in which the fluid distribution plates, except those at each end of the stack, form bipolar plates (1).

## Patentansprüche

1. Brennstoffzelle mit einem Stapel aus Fluidverteilungsplatten und Polymermaterialfolien (2), die eine Zone aufweisen, die eine Ionenaustauschmembran bildet, besitzt, wobei jede Polymermaterialfolie zwischen zwei Fluidverteilungsplatten eingefügt ist, um eine Elementarzelle zu bilden, **dadurch gekennzeichnet, dass** wenigstens auf Höhe bestimmter Elementarzellen die Brennstoffzelle eine überstehende Lippe (3) aus einem elektrisch nicht leitenden Material aufweist, die in Bezug auf wenigstens ein Ende der benachbarten Fluidverteilungsplatten übersteht, **dadurch gekennzeichnet, dass** jede Lippe in Bezug auf benachbarte Verteilungsplatten um eine Länge "d", die größer als die Dicke "e" der benachbarten Fluidverteilungsplatten ist, übersteht.

2. Brennstoffzelle nach Anspruch 1, wobei wenigstens auf Höhe bestimmter Polymermaterialfolien die Lippe in Bezug auf den gesamten Umfang der benachbarten Fluidverteilungsplatten übersteht.

3. Brennstoffzelle nach einem der Ansprüche 1 oder 2, wobei jede überstehende Lippe durch die Verlängerung einer Polymermaterialfolie gebildet ist.

4. Brennstoffzelle nach einem der Ansprüche 1 bis 3, wobei jede überstehende Lippe (3) durch das Substrat der Polymermaterialfolien (2), die eine eine Ionenaustauschmembran bildende Zone aufweisen, gebildet ist.

5. Brennstoffzelle nach Anspruch 4, wobei jede Polymermaterialfolie nachgiebig ist.

6. Brennstoffzelle nach einem der Ansprüche 1 bis 3, wobei jede überstehende Lippe durch einen Einsatz aus einem elektrisch nicht leitenden Material gebildet ist.

7. Brennstoffzelle nach einem der Ansprüche 2 bis 6, die auf Höhe jeder der Polymermaterialfolien eine überstehende Lippe aufweist.

8. Brennstoffzelle nach einem der Ansprüche 1 bis 7, wobei die Fluidverteilungsplatten mit Ausnahme jener an jedem Ende des Stapels Bipolarplatten (1) bilden.
